# EUROPEAN PATENT SPECIFICATION

(11) **EP 4 400 823 B1**
(45) Date of publication and mention of the grant of the patent: **23.07.2025**
(21) Application number: 23190774.2
(22) Date of filing: 10.08.2023
(51) Int. Cl.: G01M 5/00, G01B 11/16, G01M 11/08

(54) **WIRE STRAND, TENSIONING CABLE, GEOTECHNICAL ANCHOR AND CONCRETE STRUCTURE**
DRAHTSEIL, SPANNKABEL, GEOTECHNISCHE VERANKERUNG UND BETONSTRUKTUR
TORON DE FILS, CÂBLE DE TENSION, ANCRAGE GÉOTECHNIQUE ET STRUCTURE EN BÉTON

(43) Date of publication of application: 17.07.2024
(73) Proprietor: DYWIDAG-Systems International GmbH, 85716 Unterschleißheim (DE)
(72) Inventor: GLÄSER, Christian, 81541 München (DE); FOERSTER, Felix, 04277 Leipzig (DE); HEGMANN, Benedikt, 46487 Wesel (DE); WILD, Matthias, 80798 München (DE)
(74) Representative: Weickmann & Weickmann PartmbB

(56) References cited:
- KR-B1- 101 526 927
- US-A1- 2015 077 740

## Description

### Field of the Invention

The invention relates to the field of monitoring the condition of a concrete structure, in particular concrete structures in bonded and unbonded systems in building and infrastructure as well as geotechnical applications.

In the case of concrete structures made of pre-stressed concrete, the tensioning elements, in particular tensioning cables, are embedded directly in the concrete of the structure, whereas the connection between the tensioning elements and the concrete in the case of structures made of post-tensioned concrete is only brought about subsequently by grouting with cementitious grout. As a result of the direct or indirect connection of the tensioning elements with the concrete, the incremental strain in the tensioning elements gets consistent with the concrete strain. As the pre-stressing or post-tensioning forces, respectively, can locally vary within the tendon length whilst the force at the anchorages remain unchanged, it is not possible to measure the pre-stressing or post-tensioning forces, respectively, with typical measurement systems at the anchorages. For this reason, measurement systems including optical fibers exiting at the anchorages have been developed.

The invention may, however, also be applied to unbonded tensioning elements, as well as geotechnical strand anchors and the like.

### Technological Background

With the aim of being able to monitor the condition of a concrete structure, US 9,575,271 B2 discloses a tensioning cable with an optical fiber embedded therein. The optical fiber runs between the strands of the tensioning cable formed from these strands. Each of the strands in turn comprises a plurality of wires which are helically twisted together. Although the strands may be protected by a sheath, for example made of PE (polyethylene), they have an irregular and uneven surface due to the helical twisting of the wires. Thus, the optical fiber lies against the irregular and uneven surface of the strands. The resulting clamping force, which consequently varies in the longitudinal direction of the tensioning cable, makes the interpretation of the measurement results obtained by means of the optical fiber considerably more difficult.

Additionally, US 2015/077740 A1 discloses a cable with optical fiber for a prestressed concrete structure according to the preamble of claim 1. Further, it is referred to KR 101 526 927 B1.

### Summary of the Invention

It is therefore the object of the present invention to provide a solution to this problem.

According to the invention, as defined in claim 1, this object is solved by a wire strand comprising at least three wires, wherein an optical fiber is arranged in a cavity between three adjacent ones of the at least three wires, which optical fiber comprises a fiber core and at least one further layer surrounding the fiber core, wherein the diameter of the largest imaginary circle inscribable in the cross-section of the cavity is smaller than the outer diameter of the optical fiber, wherein the diameter of the fiber core is smaller than the diameter of said largest imaginary circle, and wherein the ratio of the outer diameter of the optical fiber to the diameter of that one of the three adjacent wires which has the smallest diameter is at least 0.15 and at most 0.18.

Due to the fact that, according to the invention, the optical fiber is arranged in the tensioning strand, it is in contact with a longitudinally substantially uniform surface, namely the surface of the three adjacent wires of the tensioning strand forming the cavity, which extends substantially uniformly in the longitudinal direction of the tensioning strand, thus providing longitudinally uniform conditions for measurements. Since the diameter of the imaginary circle inscribed in the cross-section of the cavity (in the following also referred to as "cavity circle") is smaller than the outer diameter of the optical fiber, the optical fiber can be held in the cavity purely by clamping force. The additional use of adhesives is not required. Additional measures for fixing the optical fiber in the tensioning strand are not required. At the same time, the optical fiber is protected by the outer wires of the strand. Furthermore, since the diameter of the fiber core is smaller than the diameter of the cavity circle, there is no risk of damage to the fiber core, which is important for measurements. At the same time, however, the fiber core is mechanically coupled to the wires of the strand to a degree that enables meaningful measurements if the ratio of the outer diameter of the optical fiber to the diameter of that one of the three adjacent wires that has the smallest diameter is at least about 0.15 and at most about 0.18, preferably at least about 0.16 and at most about 0.17, more preferably at least about 0.163 and at most about 0.169.

The wire strand according to the present invention, and in particular the optical fiber included therein, allows to measure the strain in a locally resolved manner, i.e. resolved along the length of the wire strand. The measurements may be carried out based on both Brillouin or Rayleigh radiation.

In the case of pre-stressed and/or post-tensioned concrete structures the locally resolved measurement allows to localize the position of possibly critical parts of the concrete structure. In geotechnical applications this is also true for the bonded length of the anchor. In unbonded applications at least the overall behavior of the tensioning element between its anchorages can be detected. And the same is true for the free length of geotechnical strand anchors.

In addition, it is to be noted that the invention further allows to monitor the strain of the tensioning element during the initial tensioning of the same.

Advantageously, the Young's modulus of the material from which the at least one further layer is formed may amount to between about 1,000 MPa and about 210,000 MPa.

For example, at least one of the at least one further layers surrounding the fiber core may be formed from a polyacrylate.

Additionally or alternatively, at least one of the at least one further layer surrounding the fiber core, preferably the radially outermost layer of the optical fiber, may be formed of metal, preferably steel.

In order to be able to prevent a harmful influence of the metal layer on the steel of the tension wires, it is proposed, that the standard potential of the metal of the at least one further layer surrounding the fiber core is lower than or equal to the standard potential of the wires of the strand. Here, the standard potential is the electrochemical potential, the value of which provides information about the ability of the metal to accept electrons.

In a further development of the invention, it is proposed that the wire strand comprises a center wire and a plurality of outer wires, preferably helically wound around the center wire, wherein at least six of the outer wires are contacting the center wire. Typically, a wire strand used in connection with the present invention may comprise a center wire surrounded by six outer wires. Such a strand has at least six cavities around the center wire in which optical fibers can be disposed. The diameter of the center wire can be up to 3% larger than the diameter of the outer wires.

For such a wire strand it is further suggested that a further optical fiber may be arranged in a further cavity formed by the center wire and two adjacent outer wires, at least one further layer surrounding the fiber core of the further optical fiber being formed by a gel. In this way, even if the further optical fiber additionally also has a cladding layer, for example formed of metal, mechanical decoupling between the fiber core and the cladding or the wires of the stranded wire can be ensured, so that the further optical fiber can be used, for example, as a temperature sensor. Such a temperature sensor can facilitate the evaluation of the measurement signals originating from the first optical fiber. It is to be understood that the outer diameter of the further optical fiber can be smaller than the diameter of the cavity circle.

It should be added that the aforementioned optical fibers have, on the one hand, the advantage of alkali resistance, which is important with respect to the cement contained in the concrete, and, on the other hand, the advantage of a service life that usually exceeds the service life of the building structure, so that the condition of the building structure can be monitored even toward the end of the service life of the building structure.

A tensioning strand of the type mentioned above is neither anticipated by the aforementioned US 9,575,271 B2 nor by any other prior art document. EP 3,805,726 A1 discloses a measuring system comprising an optical fiber, but deals almost exclusively with metrological aspects. The optical fiber known from US 5,026,141 runs in a straight line on the outer surface of a pipeline. Similarly, the optical fiber known from US 5,841,139 runs on a frame embedded in concrete.

According to a second aspect, the present invention relates to a tensioning cable including at least one wire strand according to the present invention.

According to a third aspect, the present invention relates to a concrete structure including at least one wire strand according to the present invention or at least one tensioning cable according to the present invention, said concrete building structure preferably being made from pre-stressed concrete and/or post-tensioned concrete.

### Brief Description of the Drawings

**In** the following the invention will be explained in more detail referring to the attached drawings, in which
- Figure 1: shows a schematic cross-section of a wire strand according to the invention;
- Figure 2: shows a schematic cross-section of an exemplary embodiment of an optical fiber as can be used in the context of the invention;
- Figure 3: shows a schematic representation of a pre-stressed concrete structure according to the invention;
- Figure 4: shows a schematic representation of a post-tensioned concrete structure according to the invention;
- Figure 5: a schematic representation of an unbonded concrete structure according to the invention; and
- Figure 6: shows a schematic representation of a geotechnical strand anchor according to the invention.

### Detailled Description of an Embodiment

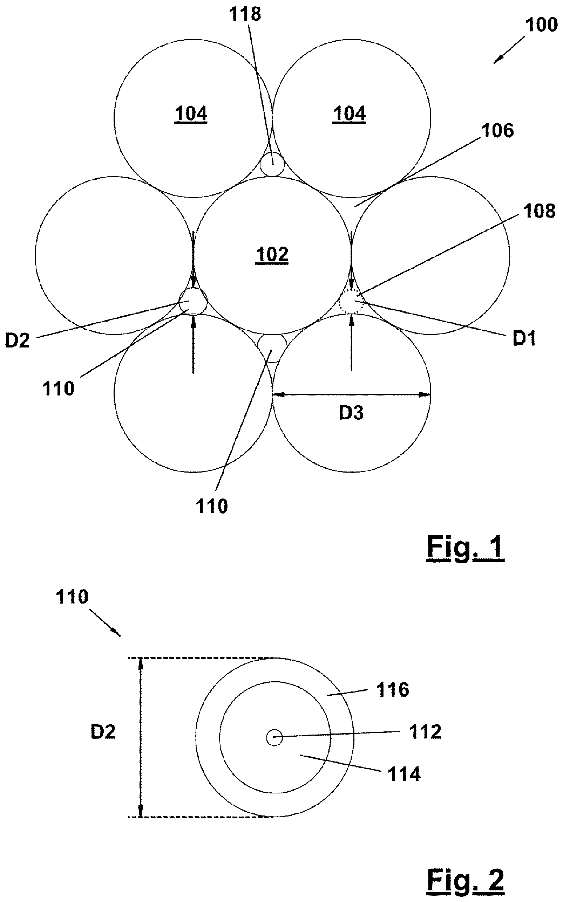

In Figure 1, a wire strand according to the invention is generally designated 100. The wire strand 100 includes a central wire 102 and six outer wires 104 surrounding the central wire 102.

A cavity 106 is formed between the central wire 102 and each two adjacent outer wires 104. A hypothetical or imaginary circle 108 may be inscribed in this cavity 106, which contacts all three wires 102-104-104. The diameter of this circle 108, shown as dotted circle in Figure 1, is denoted D1 in Figure 1.

At least one of the cavities 106 may be used to receive an optical fiber 110. At the left side of Figure 1, at the same level as the circle 108, an optical fiber is shown for merely explanatory reasons. In particular, it is shown that the optical fiber 110, in a state not received in the cavity 106 and therefore undeformed state, has a diameter D2 which is greater than the diameter D1 of the imaginary circle 108. For this and merely explanatory reasons, the outline of the optical fiber 110 is shown to intersect the outlines of the wires 102 and 104.

The actual installed state of the optical fiber 110 is shown centered between the undeformed fiber 110 (left) and the imaginary circle 108 (right). As is shown, the clamping forces of the wires 102, 104 have deformed the outer surface of the optical fiber 110 so that the optical fiber 110 is securely held between the wires.

As shown in Figure 2, the optical fiber 110 includes a fiber core 112 and at least one further layer surrounding the fiber core 112. In the illustrated embodiment, two further layers are provided, namely a layer 114 directly surrounding the fiber core 112, which may for example be formed from a polyacrylate, and an outer (protective) layer 116, which may for example be formed from a metal, preferably steel.

As the inventors have recognized, by simply clamping the optical fiber 110 between the wires 102, 104, i.e., without using any additional adhesive, it is possible to achieve that, on the one hand, the fiber is mechanically connected to the wires 102, 104 so tightly that it can provide information about their state of elongation and thus also about the state of the concrete structure, but that, on the other hand, the fiber core 112 is not subjected to such high pressure that its light conduction properties and thus the function of the optical fiber 110 as a whole would be compromised. It is to the credit of the inventors to have recognized that this objective can be achieved, in particular, if the ratio of the outer diameter D2 of the optical fiber 110 to the diameter D3 of an outer wire 104 is at least about 0.15 and at most about 0.18, preferably at least about 0.16 and at most about 0.17, more preferably at least about 0.163 and at most about 0.169.

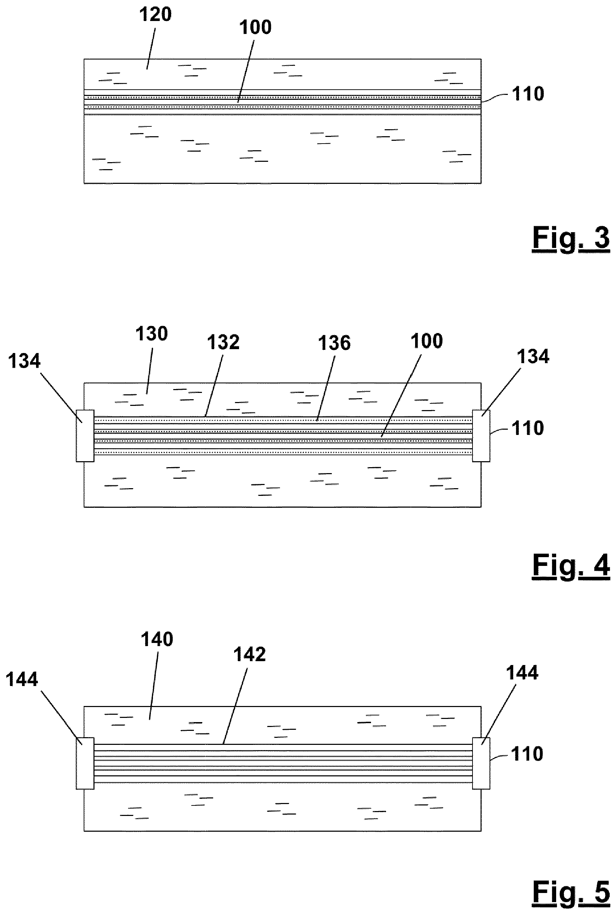

Figure 3 shows a schematic representation of a pre-stressed concrete structure 120 according to the invention.

In this pre-stressed concrete structure 120, a plurality of pre-stressed strands is embedded directly in the concrete, at least one of these strands being a strand 100 according to the invention with an optical fiber 110. After curing of the concrete, the strands may remain in the concrete without anchoring by a mechanical anchorage. In this case, the optical fiber 110 can be led out of the strand 100 according to the invention in a simple manner at one of its ends and fed to a measuring apparatus (not shown).

Figure 4 shows a schematic representation of a post-tensioned concrete structure 130 according to the invention.

In this post-tensioned concrete structure 130, a sheathing tube 132 is embedded in the concrete, into which a plurality of strands can be drawn after or before curing of the concrete, including at least one strand 100 according to the invention. After tensioning the strands and anchoring same by means of mechanical anchorages 134, the interior of the sheathing tube 132 remaining between the strands is filled with grout 136. After hardening, this provides the necessary bond between the strands and the surrounding concrete of the post-tensioned concrete structure 130.

According to Figure 5, showing the example of an unbonded concrete structure 140, it is also conceivable in accordance with the invention to omit the step of filling the cladding tube 142 there with grout. In this case, at least the overall condition of the unbonded concrete structure 140 between the anchorages 144 can be detected by means of the strand 100 provided with the optical fiber 110.

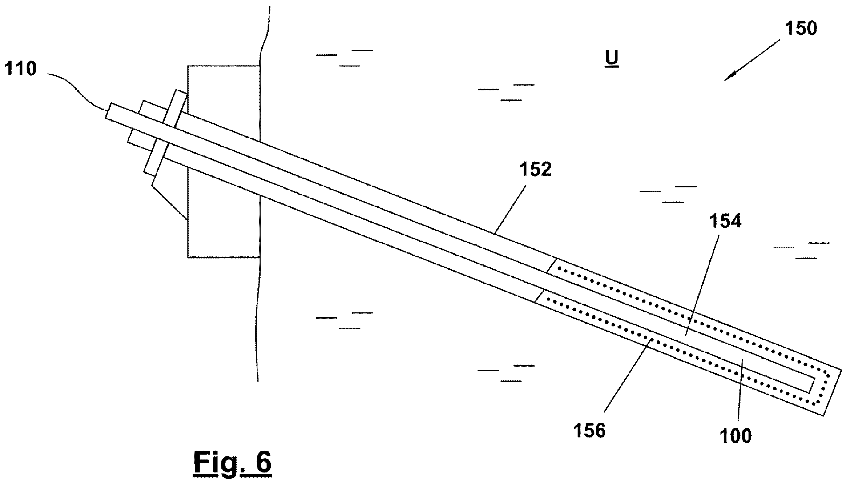

Finally, Figure 6 shows a schematic representation of a geotechnical strand anchor 150 according to the invention. For the installation of this anchor 150, a borehole 152 is made in the underground U in a manner known per se. The anchor 150 is inserted into this borehole 152. Tthe tensioning element 154 of the anchor 150 comprises a plurality of strands, including at least one strand 100 according to the invention comprising an optical fiber 110. Grout 156 is then filled into a portion of the borehole 152, which, after curing, holds the anchor 150 in the borehole 152. Outside the borehole 152, the anchor 150 can then be tensioned in a manner known per se. In this process, the optical fiber 110 is fed out of the anchor 150 at the free end of the tensioning element 154 of the anchor 150 and fed to a measuring apparatus (not shown).

It is to be added that in addition to the optical fiber 110 intended for strain measurement, another optical fiber 118 can be provided (see Figure 1), which can be used as a temperature sensor. This temperature measuring fiber 118 preferably does not have a metal cladding, but is in contact with the wires 102, 104 only via a gel in order to mechanically decouple it from the latter.

It should further be added that two methods are conceivable for inserting the fiber 110 and optionally the fiber 118 into the strand 100.

According to a first method, in a first step one of the outer wires 104 is removed from the strand 100. Subsequently, in a second step, the optical fiber 110 is inserted. Finally, the previously removed wire is added back to the strand 100 in a third step.

According to a second method, the strand 100 is spliced between two clamping jaws. The optical fiber 110 then is inserted into the strand 100 through the gap created thereby. Further, the splice is allowed to travel continuously along the length of the strand 100 or the strand 100 is allowed to travel continuously thorough the splicing device.

Below specific values for three embodiments are shown. Examples 1 and 2 resulted in measurements which were meaningful for the strain of the concrete structure, while the negative example resulted in unsuable measurements.

### Example 1:

| | |
|---|---|
| D1 | = 0.811 mm |
| D2 | = 0.85 mm |
| D3 | = 5.20 mm |
| D2 / D3 | = 0.163 |
| D_{fiber core} | = 0.82 µm |
| D_{core wire} | = 5.36 mm |

### Example 2:

| | |
|---|---|
| D1 | = 0.808 mm |
| D2 | = 0.85 mm |
| D3 | = 5.17 mm |
| D2 / D3 | = 0.169 |
| d_{fiber core} | = 0.82 µm |
| d_{core wire} | = 5.32 mm |

### Negative Example:

| | |
|---|---|
| D1 | = 0.640 mm |
| D2 | = 0.85 mm |
| D3 | = 4.10 mm |
| D2 / D3 | = 0.208 |
| d_{fiber core} | = 0.82 µm |
| d_{core wire} | = 4.22 mm |

## Claims

1. A wire strand (100) comprising at least three wires (102, 104),
wherein an optical fiber (110) is arranged in a cavity (106) between three adjacent ones of the at least three wires (102, 104), which optical fiber (110) comprises a fiber core (112) and at least one further layer (114, 116) surrounding the fiber core (112),
wherein the diameter (D1) of the largest imaginary circle (108) inscribable in the cross-section of the cavity (106) is smaller than the outer diameter (D2) of the optical fiber (110),
wherein the diameter of the fiber core (112) is smaller than the diameter (D1) of said largest imaginary circle (108),
**characterized in that** the ratio of the outer diameter (D2) of the optical fiber (110) to the diameter (D3) of that one of the three adjacent wires (102, 104) which has the smallest diameter is at least about 0.15 and at most about 0.18.

2. The wire strand according to claim 1,
**characterized in that** the Young's modulus of the material from which the at least one further layer (114, 116) is formed amounts to between about 1,000 MPa and about 210,000 MPa.

3. The wire strand according to claim 1 or claim 2,
**characterized in that** at least one (114) of the at least one further layer surrounding the fiber core (112) is formed from a polyacrylate.

4. The wire strand according to any of claims 1 to 3,
**characterized in that** at least one (116) of the at least one further layer surrounding the fiber core (112) , preferably the radially outermost layer of the optical fiber (110), is formed of metal, preferably steel.

5. The wire strand according to claim 4,
**characterized in that** the standard potential of the metal of the at least one further layer (116) surrounding the fiber core (112) is lower than or equal to the standard potential of the wires (102, 104) of the strand (100).

6. The wire strand according to any of claims 1 to 5,
**characterized in that** it comprises a center wire (102) and a plurality of outer wires (104), preferably helically wound around the center wire (102), wherein at least six of the outer wires (104) are contacting the center wire (102).

7. The wire strand according to any of claims 1 to 6,
**characterized in that** a further optical fiber (118) is arranged in a further cavity (106) formed by the center wire (102) and two adjacent outer wires (104), wherein at least one further layer surrounding the fiber core of the further optical fiber is formed by a gel.

8. The wire strand according to any of claims 1 to 7,
**characterized in that** the ratio of the outer diameter (D2) of the optical fiber (110) to the diameter (D3) of that one of the three adjacent wires (104) which has the smallest diameter is at least about 0.16 and at most about 0.17, preferably at least about 0.163 and at most about 0.169.

9. A tensioning cable including at least one wire strand (100) according to any of claims 1 to 8.

10. A geotechnical anchor (150) including at least one wire strand (100) according to any of claims 1 to 8.

11. A concrete structure (120; 130; 140) including at least one wire strand (100) according to any of claims 1 to 8 or at least one tensioning cable according to claim 9.

12. A concrete structure according to claim 11,
**characterized in that** said concrete structure is made from pre-stressed concrete and/or post-tensioned concrete.

## Patentansprüche

1. Drahtlitze (100), umfassend wenigstens drei Drähte (102, 104),
wobei eine optische Faser (110) in einem Hohlraum (106) zwischen drei benachbarten der wenigstens drei Drähte (102, 104) angeordnet ist, welche optische Faser (110) einen Faserkern (112) und wenigstens eine weitere Schicht (114, 116) umfasst, welche den Faserkern (112) umgibt,
wobei der Durchmesser (D1) des größten imaginären Kreises (108), welcher in dem Querschnitt des Hohlraums (106) einschreibbar ist, kleiner als der Außendurchmesser (D2) der optischen Faser (110) ist,
wobei der Durchmesser des Faserkerns (112) kleiner als der Durchmesser (D1) des größten imaginären Kreises (108) ist,
**dadurch gekennzeichnet, dass** das Verhältnis des Außendurchmessers (D2) der optischen Faser (110) zu dem Durchmesser (D3) desjenigen der drei benachbarten Drähte (102, 104), welcher den kleinsten Durchmesser aufweist, wenigstens etwa 0,15 und höchstens etwa 0,18 beträgt.

2. Drahtlitze nach Anspruch 1,
**dadurch gekennzeichnet, dass** der Young-Modul des Materials, aus welchem die wenigstens eine weitere Schicht (114, 116) gebildet ist, zwischen etwa 1.000 MPa und etwa 210.000 MPa beträgt.

3. Drahtlitze nach Anspruch 1 oder Anspruch 2,
**dadurch gekennzeichnet, dass** wenigstens eine (114) der wenigstens einen weiteren Schicht, welche den Faserkern (112) umgibt, aus einem Polyacrylat gebildet ist.

4. Drahtlitze nach einem der Ansprüche 1 bis 3,
**dadurch gekennzeichnet, dass** wenigstens eine (116) der wenigstens einen weiteren Schicht, welche den Faserkern (112) umgibt, vorzugsweise die radial äußerste Schicht der optischen Faser (110), aus Metall, vorzugsweise Stahl, gebildet ist.

5. Drahtlitze nach Anspruch 4,
**dadurch gekennzeichnet, dass** das Standardpotential des Metalls der wenigstens einen weiteren Schicht (116), welche den Faserkern (112) umgibt, kleiner als oder gleich dem Standardpotential der Drähte (102, 104) der Litze (100) ist.

6. Drahtlitze nach einem der Ansprüche 1 bis 5,
**dadurch gekennzeichnet, dass** sie einen Mitteldraht (102) und eine Mehrzahl von äußeren Drähten (104) umfasst, welche vorzugsweise schraubenförmig um den Mitteldraht (102) gewickelt sind, wobei wenigstens sechs der äußeren Drähte (104) den Mitteldraht (102) kontaktieren.

7. Drahtlitze nach einem der Ansprüche 1 bis 6,
**dadurch gekennzeichnet, dass** eine weitere optische Faser (118) in einem weiteren Hohlraum (106) angeordnet ist, welcher durch den Mitteldraht (102) und zwei benachbarte äußere Drähte (104) gebildet ist, wobei wenigstens eine weitere Schicht, welche den Faserkern der weiteren optischen Faser umgibt, durch ein Gel gebildet ist.

8. Drahtlitze nach einem der Ansprüche 1 bis 7,
**dadurch gekennzeichnet, dass** das Verhältnis des Außendurchmessers (D2) der optischen Faser (110) zu dem Durchmesser (D3) desjenigen der drei benachbarten Drähte (104), welcher den kleinsten Durchmesser aufweist, wenigstens etwa 0,16 und höchstens etwa 0,17 beträgt, vorzugsweise wenigstens etwa 0,163 und höchstens etwa 0,169.

9. Spannkabel, umfassend wenigstens eine Drahtlitze (100) nach einem der Ansprüche 1 bis 8.

10. Geotechnischer Anker (150), umfassend wenigstens eine Drahtlitze (100) nach einem der Ansprüche 1 bis 8.

11. Betonstruktur (120; 130; 140), umfassend wenigstens eine Drahtlitze (100) nach einem der Ansprüche 1 bis 8 oder wenigstens ein Spannkabel nach Anspruch 9.

12. Betonstruktur nach Anspruch 11,
**dadurch gekennzeichnet, dass** die Betonstruktur aus vorgespanntem Beton oder nachgespanntem Beton hergestellt ist.

## Revendications

1. Toron de fils (100) comprenant au moins trois fils (102, 104),
dans lequel une fibre optique (110) est agencée dans une cavité (106) entre trois fils adjacents parmi les au moins trois fils (102, 104), laquelle fibre optique (110) comprend une âme de fibre (112) et au moins une couche supplémentaire (114, 116) enveloppant l'âme de fibre (112),
dans lequel le diamètre (D1) du plus grand cercle imaginaire (108) apte à être inscrit dans la section transversale de la cavité (106) est plus petit que le diamètre externe (D2) de la fibre optique (110),
dans lequel le diamètre de l'âme de fibre (112) est plus petit que le diamètre (D1) dudit plus grand cercle imaginaire (108),
**caractérisé en ce que** le rapport du diamètre externe (D2) de la fibre optique (110) sur le diamètre (D3) du fil parmi les trois fils adjacents (102, 104) qui possède le plus petit diamètre est au moins d'environ 0,15 et au plus d'environ 0,18.

2. Toron de fils selon la revendication 1,
**caractérisé en ce que** le module de Young du matériau dont l'au moins une couche supplémentaire (114, 116) est formée vaut entre environ 1 000 MPa et environ 210 000 MPa.

3. Toron de fils selon la revendication 1 ou la revendication 2,
**caractérisé en ce qu'**au moins une couche supplémentaire (114) parmi l'au moins une couche supplémentaire enveloppant l'âme de fibre (112) est formée à partir d'un polyacrylate.

4. Toron de fils selon l'une quelconque des revendications 1 à 3,
**caractérisé en ce qu'**au moins une couche supplémentaire (116) parmi l'au moins une couche supplémentaire enveloppant l'âme de fibre (112), de préférence la couche radialement la plus externe de la fibre optique (110), est formée de métal, de préférence d'acier.

5. Toron de fils selon la revendication 4,
**caractérisé en ce que** le potentiel standard du métal de l'au moins une couche supplémentaire (116) enveloppant l'âme de fibre (112) est inférieur ou égal au potentiel standard des fils (102, 104) du toron (100).

6. Toron de fils selon l'une quelconque des revendications 1 à 5,
**caractérisé en ce qu'**il comprend un fil central (102) et une pluralité de fils externes (104), de préférence enroulés de manière hélicoïdale autour du fil central (102), dans lequel au moins six des fils externes (104) sont en contact avec le fil central (102).

7. Toron de fils selon l'une quelconque des revendications 1 à 6,
**caractérisé en ce qu'**une fibre optique supplémentaire (118) est agencée dans une cavité supplémentaire (106) formée par le fil central (102) et deux fils externes (104) adjacents, dans lequel au moins une couche supplémentaire enveloppant l'âme de fibre de la fibre optique supplémentaire est formée d'un gel.

8. Toron de fils selon l'une quelconque des revendications 1 à 7,
**caractérisé en ce que** le rapport du diamètre externe (D2) de la fibre optique (110) sur le diamètre (D3) du fil parmi les trois fils adjacents (104) qui possède le plus petit diamètre est au moins d'environ 0,16 et au plus d'environ 0,17, de préférence au moins d'environ 0,163 et au plus d'environ 0,169.

9. Câble tendeur comportant au moins un toron de fils (100) selon l'une quelconque des revendications 1 à 8.

10. Ancrage géotechnique (150) comportant au moins un toron de fils (100) selon l'une quelconque des revendications 1 à 8.

11. Structure en béton (120 ; 130 ; 140) comportant au moins un toron de fils (100) selon l'une quelconque des revendications 1 à 8 ou au moins un câble tendeur selon la revendication 9.

12. Structure en béton selon la revendication 11,
**caractérisée en ce que** ladite structure en béton est constituée de béton précontraint et/ou de béton post-mis en tension.
